# EUROPÄISCHE PATENTANMELDUNG

(11) **EP 1 617 198 A2**
(43) Veröffentlichungstag der Anmeldung: **18.01.2006**
(21) Anmeldenummer: 05013648.0
(22) Anmeldetag: 24.06.2005
(51) Int. Cl.: G01M 1/02

(54) **Auswuchtmaschine für Kraftfahrzeugräder**

(30) Priorität: 15.07.2004 DE 102004034264
(71) Anmelder: Schenck RoTec GmbH, 64293 Darmstadt (DE)
(72) Erfinder: Bornfeld, Hans-Wilhelm, 64665 Alsbach (DE); Hiermeier, Jürgen, 64287 Darmstadt (DE)
(74) Vertreter: Behrens, Helmut

(57) **Zusammenfassung**

Eine Auswuchtmaschine, die einen Abtastarm (3) mit Abtastkopf (10) zur Ermittlung der Geometriedaten mindestens einer Ausgleichsebene am Kraftfahrzeugrad (2) enthält, wobei der Abtastarm (3) beweglich am Maschinengestell gelagert ist und wobei die Bewegung des Abtastarms (3) mittels einer Messeinrichtung erfasst wird, soll derart weitergebildet werden, dass ein schnelles und sicheres Erfassen der Geometriedaten und Markieren der Ausgleichspositionen ermöglicht wird, dies wird dadurch erreicht, dass der Abtastarm (3) zweiteilig ausgebildet und aus einem parallel zur Hauptwelle (1) längs verschiebbar angeordneten Messarm (4) und einem an dessen vorderen Endbereich in einer Ebene senkrecht zur Längsachse (7) der Hauptwelle (1) schwenkbar angeordneten Schwenkarm (5) besteht, wobei der Schwenkarm (5) bogenförmig gekrümmt ausgebildet ist und zumindest in seiner Ausgangsposition in einer stabilen Lage angeordnet ist, und dass ein optisches Anzeigemittel (13) vorgesehen ist, das eine optische Markierung zumindest der Winkelposition der ermittelten Ausgleichsposition bzw. Ausgleichspositionen an dem Kraftfahrzeugrad (2) ermöglicht.

## Beschreibung

Die Erfindung betrifft eine Auswuchtmaschine nach dem Oberbegriff des Patentanspruchs 1 bzw. 9 sowie ein Verfahren zur Messung einer Unwucht nach Patentanspruch 10 bzw. 11.

Vor dem Messen der Unwucht von Kraftfahrzeugrädern mit Auswuchtmaschinen müssen zunächst Geometriedaten wie Ausgleichsdurchmesser und Abstände der Ausgleichsebenen zu einem fest definierten Bezugspunkt erfasst werden. Diese Geometriedaten können entweder von einer die Auswuchtmaschine bedienenden Person manuell über eine mit einer Auswerteeinrichtung in Verbindung stehenden Tastatur oder auch über einen Abtastarm ermittelt werden.

Die ermittelten Geometriedaten werden anschließend mit den beim Unwuchtmesslauf gewonnenen Messsignalen zur Berechnung der in den Ausgleichsebenen anzubringenden Ausgleichsgewichte herangezogen. Nach dem die Ausgleichsgewichte sowie die Ausgleichswinkellage für die Ausgleichsebenen am Kraftfahrzeugrad berechnet sind, muss die bedienende Person, nachfolgend Bediener genannt, die Ausgleichsgewichte an der entsprechenden Ausgleichsposition anbringen.

Damit ein exakter Unwuchtausgleich erzielbar ist, müssen sowohl die Geometriedaten genau ermittelt werden als auch die berechneten Ausgleichspositionen für die Ausgleichsebenen zwecks Anbringung der Ausgleichsgewichte sicher aufgefunden werden. Hierzu existieren unterschiedliche Vorrichtungen zum Abtasten der Geometriedaten sowie zum Markieren der Ausgleichspositionen zum Anbringen der Ausgleichsgewichte.

Die DE 43 25 533 offenbart hierbei eine Auswuchtmaschine bei der die Abtastung der Ausgleichspositionen für Ausgleichsgewichte erleichtert wird. Hierzu umfasst die Auswuchtmaschine zwei Lichtquellen, die eine optische Vorrichtung bilden. Die Markierung der Ausgleichspositionen erfolgt gemäß der Erfindung durch Ausrichten der beiden unterschiedliche Farben aufweisenden Lichtquellen in einem gemeinsamen Lichtpunkt, so dass eine Mischfarbe angezeigt wird. Die beiden Lichtquellen sind hierbei entweder am Maschinengestell oder an einem beweglichen Auszug befestigt.

Aus der DE 34 16 261 ist eine Auswuchtmaschine sowie ein Verfahren für Räder mit einer rotierbaren Aufnahmevorrichtung für das Rad bekannt, bei der mittels einer Tasteinrichtung der Ausgleichsdurchmesser sowie die Ausgleichsebenen-Abstände ermittelt werden können. Hierbei sind dem Tastarm entsprechende Detektormittel zur Erfassung seiner Verschiebung und der Winkelverschwenkung zugeordnet.

Aufgabe der vorliegenden Erfindung ist es, eine Vorrichtung und ein Verfahren zum Unwuchtausgleich derart weiterzubilden, dass ein schnelles und sicheres Erfassen der Geometriedaten und Markieren der Ausgleichspositionen ermöglicht wird, wobei gleichzeitig eine kompakte Bauweise der Auswuchtmaschine erreicht wird.

Diese Aufgabe wird gemäß der Merkmale des Patentanspruchs 1 dadurch gelöst, dass der Abtastarm zum Ermitteln der Geometriedaten zweiteilig ausgebildet und aus einem längsverschiebbar angeordneten Messarm und einem an dessen vorderen Endbereich schwenkbar angeordneten Schwenkarm besteht, wobei der Schwenkarm bogenförmig gekrümmt ausgebildet und der Längsarm sich parallel zur Rotationsachse der Hauptwelle erstreckt, und wobei ein optisches Anzeigemittel vorgesehen ist, das eine optische Markierung zumindest der Winkelposition der ermittelten Ausgleichsposition ermöglicht.

Aufgrund der oben beschriebenen zweiteiligen Ausbildungsform des Abtastarms, wobei der Schwenkarm bogenförmig gekrümmt ausgebildet ist, kann der Messarm sehr dicht an der Spindelmitte der Hauptwelle der Auswuchtmaschine angeordnet werden, so dass eine kompakte Bauweise der Auswuchtmaschine erzielbar ist. Der Schwerpunkt des Schwenkarmes wird derart gewählt, dass der Schwenkarm im zurückgeschwenkten Zustand verbleibt, so dass nach dem Ermitteln der Geometriedaten der Schwenkarm in der Ausgangsposition verbleibt und der Messarm in der zuletzt eingemessenen Ausgleichsebenen Position arretiert werden kann. In dieser Position des Abtastarmes kann dann ein Unwuchtmesslauf erfolgen, so dass ein Wiederfinden der zuletzt eingemessenen Ausgleichsebene entfallen kann. Hierdurch kann der Unwuchtausgleich durch den Bediener wesentlich schneller erfolgen.

Gemäß einer Weiterbildung des Erfindungsgedankens ist vorgesehen, dass vor dem Anbringen der Ausgleichsgewichte ein Eindrehen der Ausgleichsposition in die 3-6 Uhr-Stellung vorzugsweise in die 4 Uhr-Stellung erfolgt. Diese Position ist für den Bediener ergonomisch günstiger und besser einsehbar, so dass ein Anbringen der Ausgleichsgewichte für den Bediener einfacher möglich ist.

Gemäß einer besonders bevorzugten Ausführungsform ist vorgesehen, dass am vorderen Endbereich des Messarms eine punktförmige Lichtquelle derart angeordnet ist, dass das am Schwenkarm angeordnete Abtastelement und der von der Laserlichtquelle ausgesandte Lichtstrahl in einer gemeinsamen Ebene liegen, wobei sich diese Ebene senkrecht zur Längsachse der Hauptwelle erstreckt und der Lichtstrahl auf die Felgeninnenkontur des Kraftfahrzeugrades ausgerichtet ist und dass eine gedachte Verlängerung des Lichtstrahls der Lichtquelle die Längsachse der Hauptwelle schneidet. Aufgrund dieser Ausrichtung des Lichtstrahls ist die eingedrehte Winkelposition vom Durchmesser des auszuwuchtenden Kraftfahrzeugrades unabhängig.

Weiterhin ist in einer vorteilhaften Ausgestaltung vorgesehen, dass das Erreichen der Ausgleichsebene über zusätzliche optische Anzeigeelemente sowie akustische Signale anzeigbar ist. Diese Ausgestaltung unterstützt ein schnelles Auffinden der Ausgleichspositionen zum Anbringen der Ausgleichsgewichte.

Diese Aufgabe wird gemäß Patentanspruch 9 derart gelöst, dass der Abtastarm aus einem parallel zur Hauptwelle längsverschiebbar angeordneten einteiligen Messarm besteht, und wobei die dem Messarm zugeordnete Messeinrichtung aus einer ersten und einer zweiten Messeinrichtung besteht, wobei die erste Messeinrichtung die Längsverschiebung des Messarmes erfasst und die zweite Messeinrichtung als optischer Distanzsensor ausgebildet ist, der auf dem vorderen Endbereich des Messarmes in senkrecht zur Längsachse der Hauptwelle liegenden Ebenen zur Ermittlung des Abstandes des Messarmes zur Felgeninnenkontur angeordnet ist, und dass ein optisches Anzeigemittel vorgesehen ist, das eine optische Markierung zumindest der Winkelposition der ermittelten Ausgleichsposition bzw. Ausgleichspositionen ermöglicht. Da der Messarm einteilig ausgebildet ist und im wesentlichen aus einem länglichen parallel zur Hauptwelle verschiebbar angeordneten Element besteht, kann der Messarm sehr dicht an der Hauptwelle der Auswuchtmaschine angeordnet werden, womit eine kompakte Bauweise erzielbar ist. Das Ermitteln der Geometriedaten erfolgt berührungslos. Durch automatische Verfahren des Messarms und Ermitteln der Distanzwerte zum Felgendurchmesser ist ein schnelles und exaktes Berechnen und Anzeigen der Felgeninnenkontur möglich. Da das Längsverschieben und berührungslosen Erfassen der Messwerte auch während des Unwuchtmesslaufes vorgenommen werden kann, ist ein schnelles Auswuchtverfahren möglich.

Die Erfindung wird anhand von mehreren Ausführungsbeispielen, die in den Figuren dargestellt sind, näher erläutert.

Es zeigt:
- Fig. 1:: in dreidimensionaler Darstellung den Endbereich der Hauptwelle mit Kraftfahrzeugrad und zweiteilig ausgebildetem Abtastarm;
- Fig. 2:: eine Seitenansicht des in Fig. 1 dargestellten Ausführungsbeispiels;

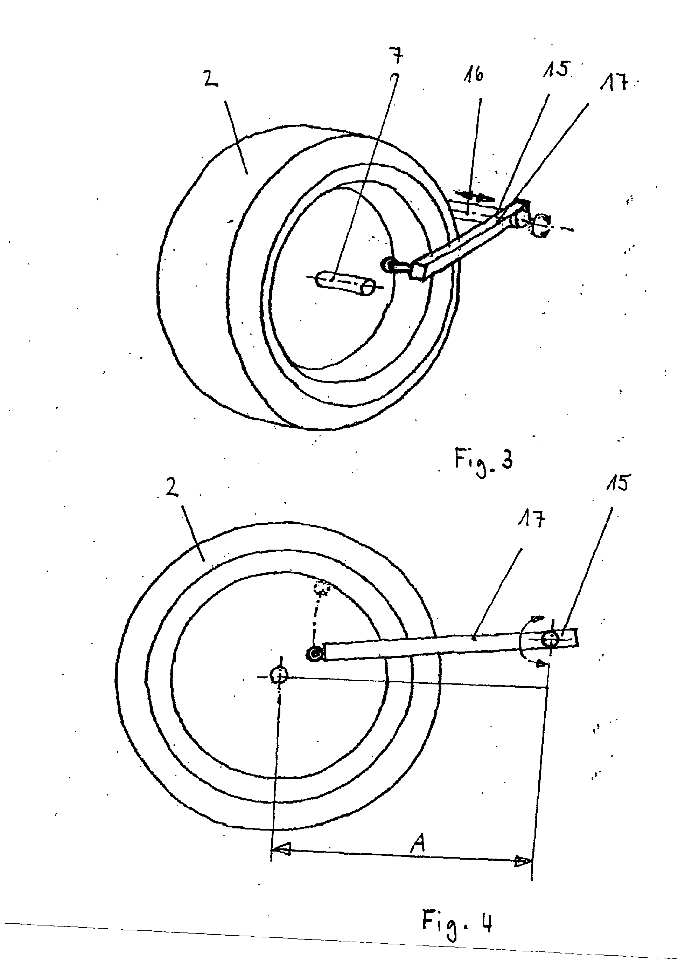

- Fig. 3:: in dreidimensionaler Darstellung die Ausbildung eines Abtastarms für die rechte Seite des Felgenflansches;
- Fig. 4:: eine Seitenansicht des in Fig. 3 dargestellten Ausführungsbeispiels;
- Fig. 5:: in dreidimensionaler Darstellung eine weitere Ausgestaltung eines Abtastarms für die rechte Seite des Felgenflansches;
- Fig. 6:: eine Seitenansicht des in Fig. 5 dargestellten Ausführungsbeispiels;
- Fig. 7:: in dreidimensionaler Darstellung den Endbereich der Hauptwelle mit Kfz-Rad und Abtastarm mit Distanzsensor;
- Fig. 8:: eine Seitenansicht des in Fig. 7 dargestellten Ausführungsbeispiels;
- Fig. 9:: in dreidimensionaler Darstellung ein Kfz-Rad mit Abdeckhaube und Distanzsensor auf der rechten Seite des Felgenprofils;
- Fig. 10:: eine Seitenansicht des in Fig. 9 dargestellten Ausführungsbeispiels.

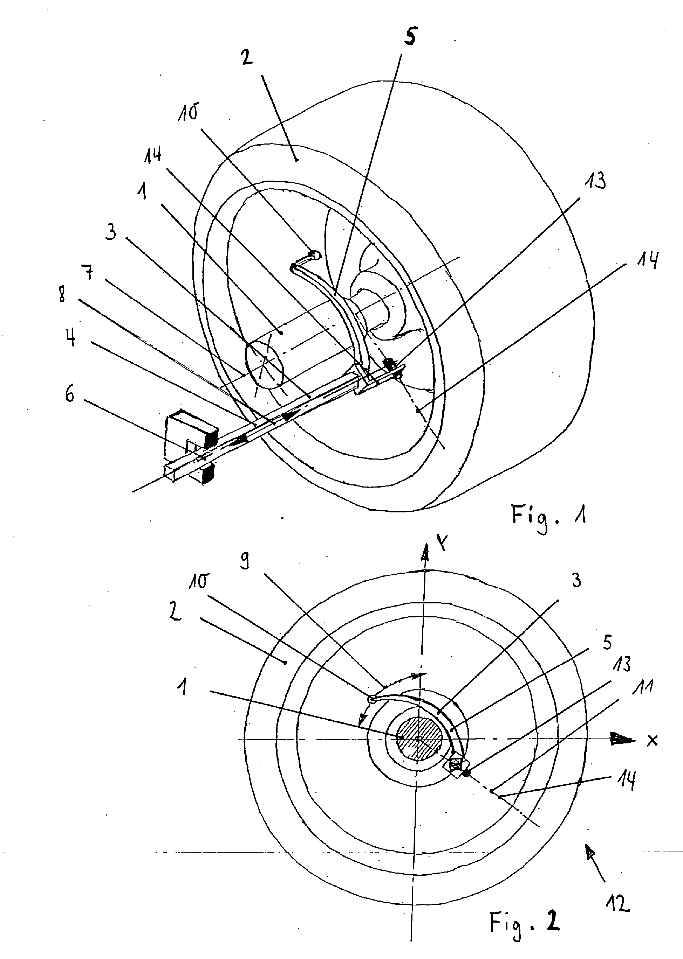

Fig. 1 zeigt in dreidimensionaler Darstellung den Endbereich einer Hauptwelle 1 einer Räderauswuchtmaschine mit aufgespanntem auszuwuchtenden Kraftfahrzeugrad 2 und einem Abtastarm 3. Die Räderauswuchtmaschine besteht im wesentlichen aus einem nicht dargestellten Maschinengestell mit der rotierbar antreibbaren Hauptwelle 1 und einer Aufnahmeeinrichtung für das auszuwuchtende Kraftfahrzeugrad 2, dem Abtastarm 3 und einer zugeordneten Recheneinrichtung sowie Anzeigeeinrichtung.

Der in Fig. 1 und 2 dargestellte erfindungsgemäße Abtastarm 3 wird zunächst zur Ermittlung der Geometriedaten des auszuwuchtenden Kraftfahrzeugrades 2 verwendet. Die zu ermittelnden Geometriedaten sind dabei der Ausgleichsdurchmesser und die Position der Ausgleichsebenen, die in Bezug auf eine vordefinierte Referenzebene ermittelt werden. Der Ausgleichsdurchmesser sowie die Position der Ausgleichsebene bzw. Ausgleichsebenen ist abhängig von der Größe des auszuwuchtenden Kraftfahrzeugrades sowie des Materials / Typs der Felge. Zur Ermittlung der Geometriedaten ist der Abtastarm 3 im wesentlichen zweiteilig ausgebildet und besteht aus einem längsverschiebbar angeordneten Messarm 4 und einem an dessen vorderen Endbereich schwenkbar angeordneten Schwenkarm 5. Der Messarm 4 ist als im Querschnitt rechteckig ausgebildeter Stab ausgebildet, dessen Längsachse 6 sich parallel zur Rotationsachse 7 der Hauptwelle 1 erstreckt. Der Messarm 4 könnte in weiteren Ausführungsformen auch andere Querschnittsformen aufweisen. Der Messarm 4 ist in Richtung seiner Längsachse 6 zur Ermittlung der Positionsdaten, d.h. der Abstände der Ausgleichsebene bzw. Ausgleichebenen zu einer Referenzebene verschiebbar ausgebildet (Pfeil 8). Die entsprechende Lagerung des Messarmes 4 ist am Maschinengestell angeordnet und ist nicht näher dargestellt. Zwecks Ermittlung des Ausgleichsdurchmessers am Kraftfahrzeugrad 2 ist der Messarm 4 an seinem dem abzutastenden Kraftfahrzeugrad zugewandten Endbereich mit einem gebogenen radial nach außen weisenden Schwenkarm 5 ausgebildet. Der Schwenkarm 5 ist drehbar um die Längsachse 6 des Messarmes 4 gelagert und kann durch Verschwenken in Richtung auf die abzutastende Position am Kraftfahrzeugrad mit einer zuvor vom Bediener ausgewählten Ausgleichsebenen-Position in Kontakt gebracht werden. Die Schwenkbewegung ist durch Pfeil 9 dargestellt. Zwecks Abtasten der Ausgleichsebenen-Position mittels des Schwenkarmes 5 ist an dem freien Ende des Schwenkarmes 5 ein Abtastelement 10 vorgesehen. Das Abtastelement 10 ist beispielsweise als Abtastkugel ausgebildet. Zur Erfassung der Geometriedaten, d.h. Abstand der Ausgleichsebenen sowie Ausgleichsdurchmesser sind sowohl dem Messarm 4 entsprechende Detektormittel zur Erfassung seiner Längsverschiebung als auch dem Schwenkarm 5 entsprechend Detektormittel zur Erfassung der Schwenkbewegung und somit zur Berechnung des Ausgleichsdurchmessers vorgesehen.

Nach dem die Geometriedaten ermittelt und in der zugehörigen Recheneinrichtung abgespeichert sind und der Unwuchtmesslauf zur Ermittlung der Winkellage und der Größe der anzubringenden Ausgleichsgewichte abgeschlossen ist, erfolgt die Durchführung des Unwuchtausgleiches durch Anbringen der berechneten Ausgleichsgewichte in den zuvor ausgewählten Ausgleichsebenen am Kraftfahrzeugrad 2 durch den Bediener. Nach Beendigung des Unwuchtmesslaufes wird das Kraftfahrzeugrad 2 abgebremst und das Kraftfahrzeugrad 2 wird automatisch oder auch manuell in die Winkelposition zum Anbringen des Ausgleichsgewichtes in eine erste Ausgleichsebene eingedreht. Das Eindrehen der Ausgleichsposition erfolgt bei Alurädern dabei vorzugsweise in "4 Uhr-Position", da eine Position im rechten unteren Quadranten für den Bediener gut einsehbar und ergonomisch günstig zum Anbringen der Ausgleichsgewichte ist. Die Ausgleichsgewichte bei Alurädern werden dabei in der Ausgleichsposition angeklebt. Das Eindrehen der Ausgleichsposition erfolgt bei Stahlrädern vorzugsweise in 12 Uhr-Position. Bei Stahlrädern werden Schlaggewichte in der Ausgleichsposition fixiert.

Die "4 Uhr-Position" ist in der Darstellung der Figur 2 ersichtlich und ist durch die strichpunktierte Linie 11 markiert. Es ist erkennbar, dass die "4 Uhr-Position" in einem durch eine x- und y-Achse aufgespanntes Koordinatensystem mittig in dem rechten unteren Quadranten 12 liegt.

Zum Wiederfinden und Markieren der zuvor mittels Abtastarm 3 abgetasteten Ausgleichsposition ist eine Lichtquelle 13, vorzugsweise eine punktförmige Lichtquelle, z.B. Laserlichtquelle, vorgesehen. Die Lichtquelle 13 ist hierbei an einem Winkelblech 14 befestigt, welches endseitig am Messarm 4 im Bereich der Lagerung des Schwenkarmes 5 angeordnet ist. Die Lichtquelle 13 bzw. der von der Laserlichtquelle ausgesandte Lichtstrahl 14 ist dabei derart ausgerichtet, dass der Mittelpunkt des Abtastkopfes sowie die von der Laserlichtquelle 13 ausgesandten Lichtstrahlen 14 in einer gemeinsamen Ebene liegen, wobei sich diese Ebene senkrecht zur Rotationsachse 7 der Hauptwelle 1 erstreckt. Wie man es deutlich aus der Fig. 2 erkennen kann, schneidet die Verlängerung des Lichtstrahles 14 der Lichtquelle 13 die Rotationsachse 7 der Hauptwelle 1. Aufgrund dieser Anordnung der Lichtquelle 13 ist die eingedrehte Winkelposition vom Durchmesser des auszuwuchtenden Kraftfahrzeugrades 2 unabhängig.

Zum Markieren der ersten Ausgleichsebene wird der Messarm 4 von dem Bediener aus der Ausgangsposition gezogen. Sobald der Messarm die Ausgangsposition verlässt, wird in der Anzeigeeinrichtung ein Gewichtesymbol angezeigt, welches die zu markierende Ausgleichsebene visualisiert. Der Bediener entnimmt dann das zuvor berechnete und angezeigte Ausgleichsgewicht aus einem entsprechenden Gewichtefach. Bei Erreichen der Ausgleichsebene wird die Laserlichtquelle 13 eingeschaltet und die Ausgleichsposition wird somit optisch angezeigt. In einer weiteren Ausführungsform kann bei Erreichen der Ausgleichsposition auch eine zusätzliche akustische Bestätigung erfolgen.

Weiterhin kann das Auffinden der Ausgleichsebene für den Bediener mittels einer sogenannten Ampelsteuerung erleichtert werden. Entsprechend der Weglänge zwischen der Ausgangsposition des Messarmes 4 und der Ausgleichsposition am Kraftfahrzeugrad 2 erfolgt die optische Anzeige auf der Anzeigeeinrichtung nach dem Prinzip der Ampelsteuerung, d.h. weit entfernt von der Ausgleichsebene wird das Gewichtesymbol rot oder langsam blinkend angezeigt. Bei Annäherung an die Ausgleichsebene wird das Gewichtesymbol gelb oder schneller blinkend visualisiert. Bei Erreichen der Ausgleichsebene wird das Gewichtesymbol grün oder als Dauerlicht angezeigt. Sobald die Ausgleichsposition von dem Bediener mittels Längsverschiebung des Messarmes 4 und optischer Anzeigevorrichtung (Ampelsteuerung auf Anzeigeeinrichtung und Laserpunktmarkierung der Ausgleichsposition) gefunden ist, kann der Bediener den Messarm 4 mittels einer Klemmvorrichtung in der Position arretieren. Die Klemmung kann dabei manuell oder automatisch erfolgen. Nach erfolgter Klemmung wird das Ausgleichsgewicht an der durch den Lichtpunkt markierten Stelle durch den Bediener befestigt.

Bei einem Unwuchtausgleich in zwei Ausgleichsebenen erfolgt anschließend das Wiederauffinden der zweiten Ausgleichsebene mittels Messarm 4, wobei zuvor ein Eindrehen der Ausgleichsposition in "4-Uhr-Stellung" für die zweite Ausgleichsposition erfolgt. Das Markieren der Ausgleichsebene erfolgt wie oben beschrieben mittels einer optischen Anzeigeeinrichtung.

Das Eindrehen in die zweite Ausgleichsposition kann dabei beispielsweise bei offener Schutzhaube halbautomatisch erfolgen. Dabei wird das Kraftfahrzeugrad 2 von dem Bediener per Hand tangential angedreht. Das Abbremsen des Kraftfahrzeugrades 2 bei erreichter Winkelposition erfolgt dabei automatisch.

In einer weiteren Ausführungsform des Erfindungsgedankens sind die nachfolgenden Schritte zum Markieren der Ausgleichsposition bzw. der Ausgleichspositionen vorgesehen. Der zu den Fig. 1 und 2 beschriebene zweiteilig ausgebildete Abtastarm 3 wird hierbei ebenfalls in einem ersten Schritt zur Ermittlung der Geometriedaten - wie zuvor bereits näher erläutert - eingesetzt. Anschließend wird der Schwenkarm 5, nach Abtasten der Ausgleichsebenenposition mittels der Abtastkugel 10, wieder in seine Ausgangsposition nach innen geschwenkt. Der Messarm 4 selbst verbleibt in dieser Position und wird nun mittels einer Arretiervorrichtung geklemmt. Die Arretiervorrichtung ist nicht dargestellt und kann eine mechanische, magnetische oder sonstig bekannte Arretierung bewirken. Die Arretierung kann dabei von dem Bediener per Hand oder auch automatisch erfolgen.

Da, wie zuvor näher erläutert, der Messarm 4 in der Ausgleichsebenenposition verbleibt und die Lichtquelle 13 derart ausgerichtet und am Messarm 4 befestigt ist, dass der Mittelpunkt des Abtastkopfes 10 sowie die von der Laserlichtquelle 13 ausgesandten Lichtstrahlen 14 in einer gemeinsamen Ebene liegen, kann das Wiederfinden dieser Ausgleichsebene nach erfolgtem Unwuchtmesslauf entfallen. Der Abtastarm 3 mit nach innen geschwenktem Schwenkarm 5 befindet sich auf Grund der Arretierung exakt in der Ausgleichsebenen-Position und nach erfolgtem Eindrehen des Kraftfahrzeugrades 2 in die entsprechende Winkelposition wird die Laserlichtquelle 13 zwecks optischer Markierung der Ausgleichsposition eingeschaltet. Ein Markieren der Ausgleichsebene für die zweite Ausgleichsposition erfolgt anschließend in gleicher Art und Weise wie es zu dem ersten Ausführungsbeispiel beschrieben ist.

Anstelle der zuvor beschriebenen Ausführungsformen, bei denen der Bediener nach erfolgtem Unwuchtmesslauf und vorzugsweise automatischem Eindrehen des Kraftfahrzeugrades 2 in die berechnete Winkelposition, den Messarm 4 manuell aus der Ausgangsposition zieht und bei Erreichen der Ausgleichsebene eine optische Anzeige der Ausgleichsposition mittels Laserlichtquelle 13 erfolgt, kann der Messarm 4 bereits während oder auch nach der Unwuchtmessung automatisch in die erste Ausgleichsebene, z.B. über einen Getriebemotor und eine Zahnstange, gefahren werden. Be Erreichen der Ausgleichsebene wird die Punktlichtquelle eingeschaltet.

Eine weitere nicht dargestellte Ausführungsform unterscheidet sich durch die in den Figuren 1 und 2 abgebildete Auswuchtmaschine darin, dass anstelle der am Abtastarm 3 mittels Winkelblech angeordneten punktförmigen Lichtquelle 13 eine Lichtstrichquelle am Maschinengestell befestigt ist. Die Lichtstrichquelle, vorzugsweise ein Strichlaser, ist dabei derart ausgerichtet, dass der ausgesendete Lichtstrich auf der Felgeninnenkontur sich parallel zur Rotationsachse 7 der Hauptwelle 1 erstreckt und eine ergonomisch für den Bediener gut erreichbare und gut sichtbare Winkelposition markiert. Die Markierung liegt dabei in einem Winkelsektor 12 zwischen 3-6 Uhr-Stellung, vorzugsweise in 4 Uhr-Stellung.

Die Markierung mittels des Strichlasers dient dem Bediener nach erfolgtem Messlauf zur optischen Anzeige der Winkellage der Ausgleichspositionen. Die Ausgleichsebene, die der Bediener zuvor ausgewählt und die entsprechenden Geometriedaten mittels Abtastarm 3 ermittelt hat, müssen von dem Bediener selbst wieder gefunden werden.

Da die Gewichte aufgrund der Ebenentrennung möglichst weit auseinandergesetzt werden, können als Ausgleichsebenen an der Innenkontur des Kfz-Rades beispielsweise die Abrisskante zum Felgenhorn, sowie die Position innen direkt am Felgenflansch gewählt werden. Diese Positionen sind von dem Bediener auch ohne Markierungshilfen für die Ausgleichsebenen leicht wiederzufinden.

Die zu den zuvor beschriebenen Ausführungsformen gezeigten Auswuchtmaschinen sind bei Kraftfahrzeugrädern 2 einsetzbar, bei denen die Ausgleichsebenen auf der linken Seite (Maschinengestell zugewandten Seite) des Felgenflansches liegen. In einigen Fällen ist es jedoch erforderlich, dass die eine Ausgleichsebene auf der rechten Seite, d.h. auf der Designseite der Felge liegt. In diesem Fall kann mit dem zu den Figuren 1 und 2 dargestellten und beschriebenen Abtastarm 3 nur die linke Ausgleichsebene vermessen und nach dem Unwuchtmesslauf markiert werden. Wie es aus den Figuren 2 und 4 ersichtlich ist, ist ein zweiter Abtastarm 15 erforderlich, der am Maschinengestell befestigt ist und der eine Ermittlung der Geometriedaten der rechten Ausgleichsebene ermöglicht.

Wie es aus den Zeichnungen erkennbar ist, ist der zweite Abtastarm 15 ebenfalls zweiteilig ausgebildet und besteht aus einem längs verschiebbar angeordnetem Messarm 16 und einem an dessen vorderen Endbereich schwenkbar angeordnetem Schwenkarm 17. Der Messarm 16 erstreckt sich ebenfalls parallel zur Rotationsachse 7 der Hauptwelle, wobei er derart beabstandet angeordnet ist, dass sein Abstand A zur Rotationsachse 7 größer ist als der Radius des größten auszuwuchtenden Kraftfahrzeugrades 2. Zur Ermittlung der Geometriedaten der rechten Ausgleichsebene wird der Messarm 16 aus der Grundstellung gezogen. Zwecks Ermittlung des Ausgleichsdurchmessers ist der Messarm 16 mit einem radial nach innen weisenden Schwenkarm 17 ausgebildet. Der Schwenkarm 17 ist drehbar um die Längsachse des Messarmes 16 gelagert und kann durch Verschwenken in Richtung auf die abzutastende Position am Kraftfahrzeugrad mit einer Ausgleichsebenenposition in Kontakt gebracht werden (gestrichelte Darstellung Fig. 4). Zur Erfassung der Geometriedaten, d.h. Abstand der Ausgleichsebene sowie Ausgleichsdurchmesser sind sowohl dem Messarm 16 entsprechende Detektormittel zur Erfassung einer Längsverschiebung als auch dem Schwenkarm 17 ein separater Weg- bzw. Winkelgeber zugeordnet. Somit kann die Felgenbreite als auch der Felgendurchmesser des Kraftfahrzeugrades abgetastet werden.

Nach erfolgtem Unwuchtmesslauf wird die linke Ausgleichsebene wie bereits zu den zuvor beschriebenen Ausführungsbeispielen erläutert entsprechend markiert. Ein Markieren der rechten Ausgleichsebene nach erfolgtem Unwuchtmesslauf ist hierbei nicht vorgesehen. Der Ausgleichswinkel wird durch manuelles halbautomatisches oder automatisches Eindrehen des Rades in eine markante Position wie beispielsweise 12 Uhr- oder 3 Uhr-Stellung markiert.

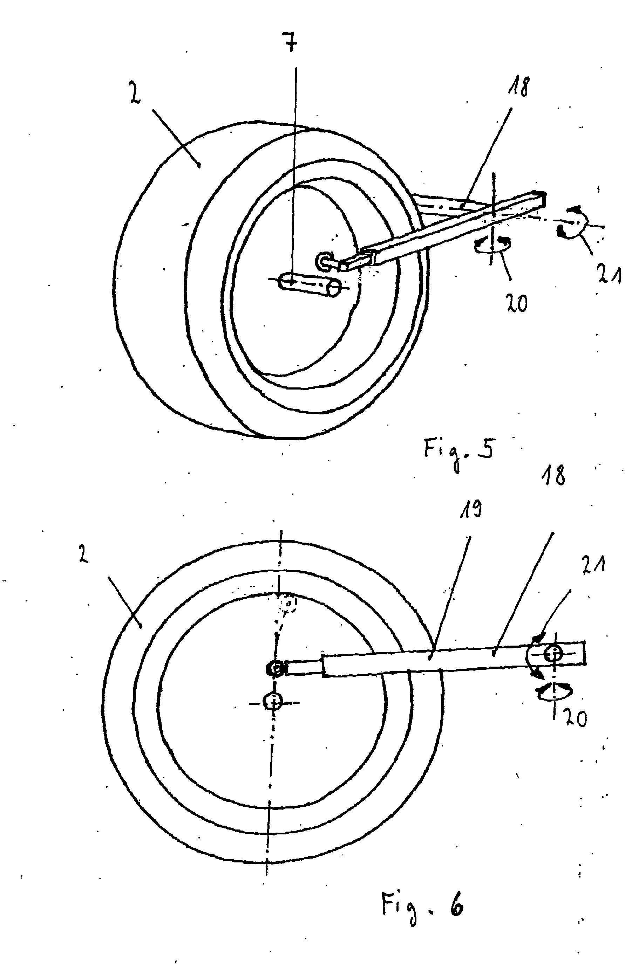

Die Figuren 5 und 6 zeigen eine weitere Ausgestaltung des zweiten Abtastarmes 18. Der zweite Abtastarm 18 ist hierbei starr mit dem Maschinengestell verbunden und ist ebenfalls derart beabstandet zur Rotationsachse 7 angeordnet, dass sein Abstand größer ist als der Radius des größten auszuwuchtenden Kraftfahrzeugrades 2. Der Abtastarm 18 ragt über die zu messende rechte Ausgleichsebene hinaus. An dem Abtastarm 18 ist ein Schwenkarm 19 befestigt, der in zwei Dimensionen schwenkbar gelagert ist (Darstellung durch Doppelpfeile 20/21). Für die Schwenkbewegungen in den zwei Dimensionen sind entsprechende Winkelgeber vorgesehen. Aufgrund der oben beschriebenen Ausführungsform kann die Felgenbreite sowie der Felgendurchmesser bestimmt werden. Wie bereits zu dem ersten Ausführungsbeispiel des zweiten Abtastarmes beschrieben, erfolgt ein Markieren der Ausgleichsebene nach dem Unwuchtmesslauf nicht.

In einer weiteren, nicht dargestellten Ausführungsform, ist ein Schwenkarm möglich, der nicht ausziehbar ist und dessen Länge konstant ist. Der Schwenkarm ist an seinem Drehpunkt wie zuvor beschrieben in zwei Dimensionen schwenkbar. Es wird aber nur der Schwenkwinkel mit einem Winkelgeber erfasst. Mit dieser vereinfachten Ausführungsform (nur ein Geber statt zwei Geber wie oben)ist die Felgenbreite messbar, jedoch nicht der Felgendurchmesser.

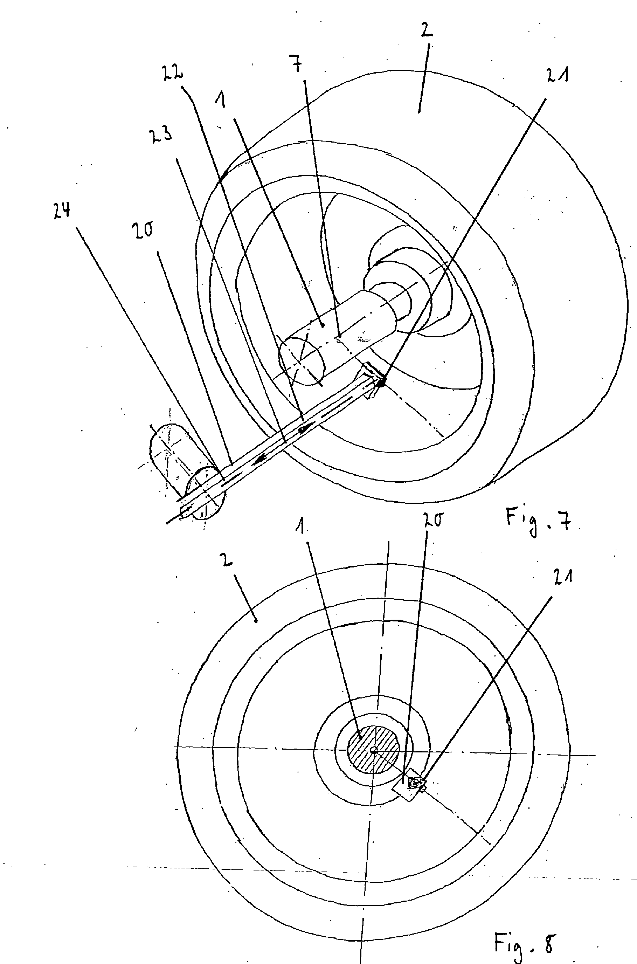

Die Figuren 7 und 8 zeigen eine weitere Ausführungsform einer Räderauswuchtmaschine mit aufgespanntem auszuwuchtendem Kraftfahrzeugrad 2 sowie einem Abtastarm 20 mit Distanzsensor 21. Diese Ausführungsform ermöglicht sowohl ein optisches Erfassen der Innenkontur des auszuwuchtenden Kraftfahrzeugrad 2 als auch ein optisches Markieren der Ausgleichspositionen in den entsprechend vorausgewählten Ausgleichsebenen.

Zur Ermittlung der Geometriedaten bzw. der Felgeninnenkontur des Kraftfahrzeugrades 2 ist der Abtastarm 20 im wesentlichen einteilig ausgebildet und besteht aus einem längs verschiebbar angeordneten Messarm 22. Die Längsverschiebung (Doppelpfeil 23) des Messarmes 22 ist dabei mit einem Wegsensor gekoppelt. Der Messarm 22 ist als ein im Querschnitt rechteckig ausgebildeter Stab ausgebildet, dessen Längsachse 24 sich parallel zur Rotationsachse 7 der Hauptwelle erstreckt. Der Messarm 22 könnte auch andere Querschnittformen aufweisen. Der Messarm 22 ist weiterhin über einen Getriebemotor verfahrbar ausgebildet, wobei wie zuvor beschrieben die Längsverschiebung über einen Wegsensor ermittelt wird. An seinem dem Kraftfahrzeugrad 2 zugewandten Endbereich weist der Messarm 22 einen Distanzsensor 21 auf, mit dem der Abstand des Distanzsensors 21 zur Felgeninnenkontur erfasst wird und die entsprechenden ermittelten Distanzwerte mit den zugeordneten Werten des Wegsensors verknüpft und anschließend in der zugeordneten Recheneinrichtung gespeichert werden. Das so ermittelte Felgeninnenprofil wird dann am Bildschirm dargestellt, so dass der Bediener am Bildschirm die vorausgewählten Ausgleichsebenen markieren kann. Die Markierung kann hierbei cursorgesteuert über einen entsprechenden Drehtaster erfolgen.

Eine Besonderheit des zuvor beschriebenen automatischen Abtastens der Raddimension besteht darin, dass die Ermittlung der Felgeninnenkontur des Kraftfahrzeugrades 2 gleichzeitig zum Unwuchtmesslauf erfolgen kann. Sobald der Bediener die Ausgleichsebenenpositionen rechts und links auf dem Bildschirm an der Innenkontur des Kfz-Rades ausgewählt und bestätigt hat, können die in der Zwischenzeit bereits vorliegenden Messwerte des Unwuchtmesslaufes mit den fehlenden Geometriedaten verrechnet werden, so dass die Ausgleichspositionen und die Größe der anzubringenden Ausgleichsgewichte berechnet und angezeigt werden können. Da das Abtasten der Raddimensionen und Auswählen der Ausgleichsebenen sowie der Unwuchtmesslauf aufgrund des berührungslosen Messverfahrens und Anzeigeverfahrens parallel vorgenommen werden kann, kann das gesamte Verfahren wesentlich schneller durchgeführt werden.

Zusätzlich kann der Messarm 22 zur automatischen Ermittlung des Radialschlags der Felge eingesetzt werde. Hierzu fährt der Messarm 22, nachdem der Bediener die Ausgleichsebenen ausgewählt hat, automatisch in die eine Ausgleichsebene. In dieser Position werden dann mittels des Distanzsensors 21 Messwerte von einer Umdrehung des Kraftfahrzeugrades ermittelt.

Obiges Verfahren ist anwendbar, wenn beide Ausgleichsebenen auf der linken Seite des Felgenflansches liegen. Soweit eine Ausgleichsebene auf der rechten Seite liegt, ist nachfolgend erläuterte Ausführungsvariante einsetzbar.

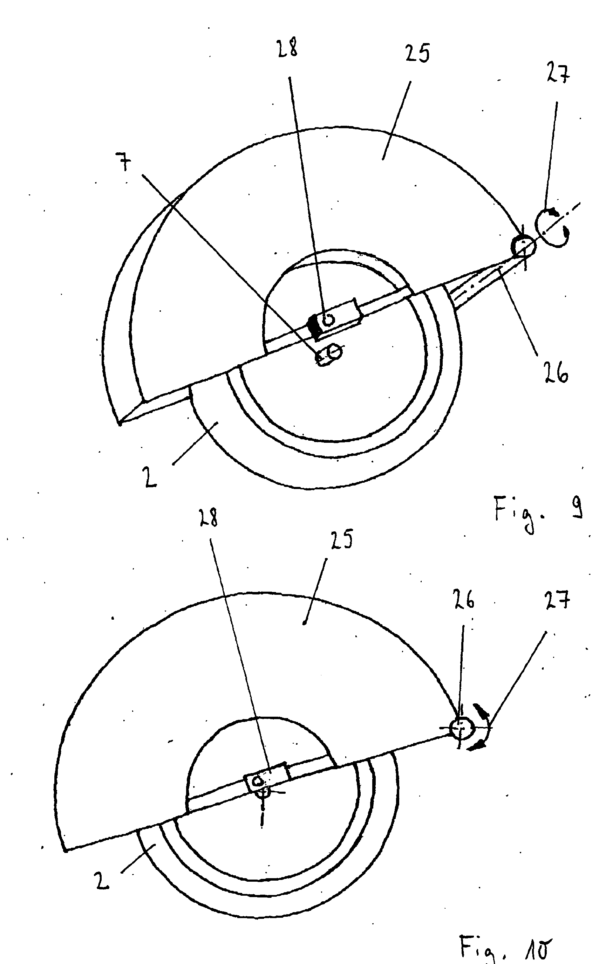

Die Figuren 9 und 10 zeigen ein Ausführungsbeispiel einer Auswuchtmaschine, mit der zusätzlich eine Abtastung des Felgenprofils auf der "Designseite" möglich ist. Die Auswuchtmaschine ist prinzipiell mit einer Abdeckhaube ausgestattet, die aus Sicherheitsgründen das auszuwuchtende Kraftfahrzeugrad während des Unwuchtmesslaufs abdeckt. Die Haube ist an einem Tragrohr 26 befestigt, welches schwenkbar am Maschinengestell gelagert ist (Schwenkbewegung durch Pfeil 27 dargestellt). Der Schwenkwinkel wird über einen im Drehgelenk angeordneten Sensor erfasst. Seitlich auf der rechten Seite in der Abdeckhaube 25 ist ein Distanzsensor 28 angeordnet, der beim Ein-/ Ausschwenken der Haube das Felgenprofil abtastet. Die Abstandswerte des Distanzsensors 28 werden mit den entsprechenden Winkelinformationen des Sensors gekoppelt, so dass das Felgenprofil berechnet und auf dem Bildschirm dargestellt werden kann. Der Bediener legt dann durch entsprechende Markierung auf dem Bildschirm die Lage der Ausgleichsebene fest. In Verbindung mit der zuvor auf der linken Seite festgelegten Ausgleichsebene kann dann die Felgenbreite ermittelt werden.

## Patentansprüche

1. Auswuchtmaschine mit einer in einem Maschinengestell rotierbar antreibbaren Hauptwelle (1), die eine Aufnahmevorrichtung für das auszuwuchtende Kraftfahrzeugrad (2) enthält, einem Abtastarm (3) mit Abtastkopf (10) zur Ermittlung der Geometriedaten mindestens einer Ausgleichsebene am Kraftfahrzeugrad (2), wobei der Abtastarm (3) beweglich am Maschinengestell gelagert ist und wobei die Bewegung des Abtastarms (3) mittels einer Messeinrichtung erfasst wird, einer weiteren Messeinrichtung zur Ermittlung von unwuchtproportionalen Messsignalen, einer Auswerteeinrichtung, die in Abhängigkeit der ermittelten Messsignale aus dem Unwuchtmesslauf und der ermittelten Geometriedaten die Größe des Ausgleichsgewichtes sowie den entsprechenden Ausgleichswinkel für die mindestens eine Ausgleichsebene berechnet, sowie einer mit der Auswerteeinrichtung verbundene Anzeigeeinrichtung, **dadurch gekennzeichnet, dass** der Abtastarm (3) zweiteilig ausgebildet und aus einem parallel zur Hauptwelle (1) längs verschiebbar angeordneten Messarm (4) und einem an dessen vorderen Endbereich in einer Ebene senkrecht zur Längsachse (7) der Hauptwelle (1) schwenkbar angeordneten Schwenkarm (5) besteht, wobei der Schwenkarm (5) bogenförmig gekrümmt ausgebildet ist und zumindest in seiner Ausgangsposition in einer stabilen Lage angeordnet ist, und dass ein optisches Anzeigemittel (13) vorgesehen ist, das eine optische Markierung zumindest der Winkelposition der ermittelten Ausgleichsposition bzw. Ausgleichspositionen an dem Kraftfahrzeugrad (2) ermöglicht.

2. Auswuchtmaschine nach Anspruch 1, wobei das optische Anzeigemittel als Punktlichtquelle (13), insbesondere als punktförmige Laserlichtquelle ausgebildet und am vorderen Endbereich des Messarmes (4) derart angeordnet ist, dass das am Schwenkarm (5) angeordnete Abtastelement (10) und der von der Laserlichtquelle ausgesandte Lichtstrahl (14) in einer gemeinsamen Ebene liegen, wobei sich diese Ebene senkrecht zur Rotationsachse (7) der Hauptwelle (1) erstreckt und der Lichtstrahl (14) auf die Felgeninnenkontur des Kraftfahrzeugrades (2) ausgerichtet ist.

3. Auswuchtmaschine nach Anspruch 2, wobei die Lichtquelle (13) derart am Messarm (4) befestigt ist, dass eine gedachte Verlängerung des Lichtstrahles (14) der Lichtquelle (13) die Rotationsachse (7) der Hauptwelle (1) schneidet.

4. Auswuchtmaschine nach Anspruch 2 oder Anspruch 3, wobei der Lichtstrahl (14) der Lichtquelle (13) in einem durch das Kraftfahrzeugrad (2) gedachten aufgespannte Koordinatensystem auf den rechten unteren Quadranten (12) der Felgeninnenkontur vorzugsweise auf "4-Uhr-Position" ausgerichtet ist.

5. Auswuchtmaschine nach einem der vorhergehenden Ansprüche, wobei der Messarm (4) eine Klemmvorrichtung aufweist.

6. Auswuchtmaschine nach Anspruch 1, wobei das optische Anzeigemittel als Strichlaser ausgebildet ist und der Strichlaser am Maschinengestell derart befestigt ist, dass der ausgesandte Laserlichtstrahl auf die Felgeninnenkontur des Kraftfahrzeugrades (2) ausgerichtet ist.

7. Auswuchtmaschine nach einem oder mehreren der vorhergehenden Ansprüche, wobei zum Wiederfinden der mittels des Abtastarmes (3) abgetasteten Ausgleichsebenen eine einen Monitor umfassenden Anzeigeeinrichtung vorgesehen ist, und dass das Erreichen der Ausgleichsebene über optische Anzeigeelemente insbesondere Gewichtesymbole auf dem Monitor anzeigbar ist.

8. Auswuchtmaschine nach einem oder mehreren der vorhergehenden Ansprüche, wobei zusätzlich akustische Mittel angeordnet sind, die bei Erreichen der Ausgleichsposition in der entsprechenden Ausgleichsebene eine akustische Bestätigung erzeugen.

9. Auswuchtmaschine mit einer in einem Maschinengestell rotierbar antreibbaren Hauptwelle (1), die eine Aufnahmevorrichtung für das auszuwuchtende Kraftfahrzeugrad (2) enthält, einem Abtastarm (20) mit Abtastkopf zur Ermittlung der Geometriedaten mindestens einer Ausgleichsebene am Kraftfahrzeugrad (2), wobei der Abtastarm (20) beweglich am Maschinengestell gelagert ist und wobei die Bewegung des Abtastarms (20) mittels einer Messeinrichtung erfasst wird, einer weiteren Messeinrichtung zur Ermittlung von unwuchtproportionalen Messsignalen, einer Auswerteeinrichtung, die in Abhängigkeit der ermittelten Messsignale aus dem Unwuchtmesslauf und der ermittelten Geometriedaten die Größe des Ausgleichsgewichtes sowie den entsprechenden Ausgleichswinkel für die mindestens eine Ausgleichsebene berechnet, einer mit der Auswerteeinrichtung verbundene Anzeigeeinrichtung, **dadurch gekennzeichnet, dass** der Abtastarm (20) aus einem parallel zur Hauptwelle (1) längsverschiebbar angeordneten einteiligen Messarm (22) besteht, und wobei die dem Messarm (22) zugeordnete Messeinrichtung aus einer ersten und einer zweiten Messeinrichtung besteht, wobei die erste Messeinrichtung die Längsverschiebung des Messarmes (22) erfasst und die zweite Messeinrichtung als optischer Distanzsensor (21) ausgebildet ist, der auf dem vorderen Endbereich des Messarmes (22) angeordnet ist und Distanzwerte in senkrecht zur Längsachse der Hauptwelle (1) liegenden Ebenen zur Ermittlung des Abstandes des Messarmes (22) zur Felgeninnenkontur ermittelt, und dass ein optisches Anzeigemittel vorgesehen ist, das eine optische Markierung zumindest der Winkelposition der ermittelten Ausgleichsposition bzw. Ausgleichspositionen ermöglicht.

10. Verfahren zur Messung einer Unwucht eines Kraftfahrzeugrades (2) unter Verwendung einer Auswuchtmaschine gemäß Patentanspruch 1 mit folgenden Verfahrensschritten:
- Ermittlung der Geometriedaten wie Ausgleichsdurchmesser und Abstand der Ausgleichsebenen am Kraftfahrzeugrad mittels eines Abtastarmes (3) der Auswuchtmaschine,
- Durchführen des Unwuchtmesslaufes unter Ermittlung der Unwuchtmessgrößen
- Ermitteln der Größe und der Winkelposition der Ausgleichsgewichte für die Ausgleichsebenen mittels der gemessenen Geometriedaten der Ausgleichsebenen und der ermittelten Unwuchtmessgrößen
- Anzeigen der Größe der Ausgleichsgewichte und der entsprechenden Winkellage an welcher das Ausgleichsgewicht in der Ausgleichsebene zur Korrektur der Unwucht angebracht werden muss,
**dadurch gekennzeichnet, dass** das Ermitteln der Geometriedaten über einen als Mess-/Schwenkarm ausgebildeten Abtastarm (3) erfolgt und wobei nach Ermitteln der zuletzt einzumessenden Ausgleichsebene der Messarm (4) in dieser Ausgleichsebenenposition arretiert wird und der Schwenkarm (5) in seine stabile Ausgangsposition zurückgeschwenkt wird, und dass nach erfolgtem Unwuchtmesslauf und Berechnung der Ausgleichsgewichte unmittelbar eine optische Markierung der Ausgleichsposition für die letzte Ausgleichsebene mittels einen am Endbereich des Messarms (4) angeordneten optischen Anzeigemittels (13) erfolgt.

11. Verfahren zur Messung einer Unwucht eines Kraftfahrzeugrades (2) unter Verwendung einer Auswuchtmaschine gemäß Patentanspruch 9 mit folgenden Verfahrensschritten:
- berührungslose Ermittlung der Geometriedaten wie Ausgleichsdurchmesser und Abstand der Felgeninnenkontur am Kraftfahrzeugrad mittels eines Abtastarmes (20) der Auswuchtmaschine,
- Berechnen und optisches Darstellen der Felgeninnenkontur des Kraftfahrzeugrades aus den zuvor genannten Daten,
- Auswahl der Ausgleichsebenen
- Durchführen des Unwuchtmesslaufes unter Ermittlung der Unwuchtmessgrößen
- Ermitteln der Größe und der Winkelposition der Ausgleichsgewichte für die Ausgleichsebenen mittels der gemessenen Geometriedaten der Ausgleichsebenen und der ermittelten Unwuchtmessgrößen
- Anzeigen der Größe der Ausgleichsgewichte und der entsprechenden Winkellage an welcher das Ausgleichsgewicht in der Ausgleichsebene zur Korrektur der Unwucht angebracht werden muss,
**dadurch gekennzeichnet, dass** das Ermitteln der Geometriedaten mit anschließender Auswahl der Ausgleichsebenen und das Durchführen des Unwuchtmesslaufes parallel zueinander durchgeführt werden.

12. Verfahren zur Messung einer Unwucht eines Kraftfahrzeugrades nach Anspruch 11, wobei zusätzlich ein berührungsloses Ermitteln der Geometriedaten der Fegenkontur rechts mittels eines in der rechten Seite einer Abdeckhaube (25) integrierten Distanzsensors (28) erfolgt und anschließend ein Berechnen und optisches Darstellen der "Designseite" der Felge des Kraftfahrzeugrades (2) aus den zuvor ermittelten Daten erfolgt und dass anschließend das Festlegen der Ausgleichsebene auf der rechten Seite erfolgt und dass das Ermitteln der Geometriedaten auf der rechten und linken Seite und das Durchführen des Unwuchtmesslaufs parallel zueinander durchgeführt werden.

13. Verfahren zur Messung einer Unwucht eines Kraftfahrzeugrades nach Anspruch 12, wobei zur Ermittlung der Geometriedaten die Felgenkonturen rechts und links automatisch abgetastet werden.
